(19) Europäisches Patentamt / European Patent Office / Office européen des brevets

(11) **EP 2 984 350 B1**

(12) **EUROPÄISCHE PATENTSCHRIFT**

(45) Veröffentlichungstag und Bekanntmachung des Hinweises auf die Patenterteilung:
**24.05.2023   Patentblatt 2023/21**

(21) Anmeldenummer: **14723677.2**

(22) Anmeldetag: **09.04.2014**

(51) Internationale Patentklassifikation (IPC):
**F15B 11/00** *(2006.01)*   **F15B 20/00** *(2006.01)*
**F15B 21/00** *(2006.01)*   **F15B 21/08** *(2006.01)*
**E04G 21/04** *(2006.01)*

(52) Gemeinsame Patentklassifikation (CPC):
**F15B 11/003; E04G 21/0436; E04G 21/0445; E04G 21/0454; E04G 21/0463; F15B 20/005; F15B 21/008; F15B 21/08;** F15B 2211/30515; F15B 2211/30565; F15B 2211/327; F15B 2211/6306; F15B 2211/6309; F15B 2211/6336; F15B 2211/665;   (Forts.)

(86) Internationale Anmeldenummer:
**PCT/AT2014/050085**

(87) Internationale Veröffentlichungsnummer:
**WO 2014/165888 (16.10.2014 Gazette 2014/42)**

(54) **ELEKTROHYDRAULISCHER STEUERKREIS**

ELECTROHYDRAULIC CONTROL CIRCUIT

CIRCUIT DE COMMANDE ÉLECTROHYDRAULIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **09.04.2013   AT 502412013**

(43) Veröffentlichungstag der Anmeldung:
**17.02.2016   Patentblatt 2016/07**

(73) Patentinhaber: **TTControl GmbH
A-1040 Wien (AT)**

(72) Erfinder:
• **SPECKS, Marcus
  66386 St. Ingbert (DE)**
• **PFEIFFER, Marcus
  66877 Ramstein-Miesenbach (DE)**
• **GRÜN, Stephan
  66265 Heusweiler (DE)**
• **VIERKOTTEN, Reiner
  46145 Oberhausen (DE)**
• **SCHNITTKER, Joseph
  44227 Dortmund (DE)**
• **LEHMANN, Andreas
  47441 Moers (DE)**
• **TEBEEK, Wolfgang
  45768 Marl (DE)**
• **KEMMETMÜLLER, Wolfgang
  A-1140 Wien (AT)**
• **HENIKL, Johannes
  A-1200 Wien (AT)**
• **KUGI, Andreas
  1200 Wien (AT)**

(74) Vertreter: **Patentanwaltskanzlei
Matschnig & Forsthuber OG
Biberstraße 22
Postfach 36
1010 Wien (AT)**

(56) Entgegenhaltungen:
EP-A1- 0 190 703       EP-A2- 1 046 610
EP-A2- 2 071 195       WO-A1-02/055813
WO-A1-2012/041076      CN-U- 202 707 904
DE-A1- 10 107 139      DE-U1- 20 215 838
JP-A- H09 265 324      JP-A- 2000 192 660

(52)  Gemeinsame Patentklassifikation (CPC): (Forts.)
      F15B 2211/8616; F15B 2211/8636;
      F15B 2211/8757

**Beschreibung**

Die Erfindung betrifft einen elektrohydraulischen Steuerkreis zum Ansteuern eines hydraulisch betätigten Stellorgans, mittels dessen ein Segment eines Manipulators, insbesondere eines Großmanipulators für Autobetonpumpen, hinsichtlich seiner Orientierung verstellbar ist.

Des Weiteren betrifft die Anmeldung ein Regelsystem zum Steuern der Orientierung eines Segments eines Manipulators, insbesondere eines Großmanipulators für Autobetonpumpen, wobei das Segment über ein Gelenk mit einer Basis oder einem Vorgängersegment des Manipulators verbunden ist und an dem Gelenk gegenüber der Basis bzw. dem Vorgängersegment um zumindest eine Drehachse mittels zumindest eines Stellorgans, vorzugsweise hydraulischen Stellorgans, schwenkbar ist.

Derzeit eingesetzte elektrohydraulische Steuerkreise bzw. damit in Zusammenhang stehende Regelsysteme, wie diese beispielsweise zum Ansteuern von mehrgliedrigen Großmanipulatoren für Autobetonpumpen verwendet werden, verfügen im Allgemeinen über einen zentralen Steuerblock, wobei einzelnen Segmente einzeln angesteuert werden können. Hierzu sind den Segmenten hydraulische Stellorgane zugeordnet, welche wahlweise elektrohydraulisch mittels Pilotventilen oder manuell über Handhebel bedient werden können. Die hydraulischen Stellorgane sind in der Regel als Hydraulikzylinder ausgeführt, wobei die Auslenkung eines im Zylinder aufgenommenen Kolbens mit der Auslenkung eines zugeordneten Segments korreliert. Zur Dämpfung von elastischen Schwingungen werden in den derzeit eingesetzten Systemen Algorithmen verwendet, gemäß welchen die Druckdifferenz des Kammerndruckes des jeweiligen Zylinders auf das dem Zylinder zugehörige Steuerventil rückführt wird. Um einen durch die Rückführung bedingten Drift der Segmente zu verhindern und eine Lastenregelung zu ermöglichen, werden bekannte Systeme häufig mit geodätischen Winkel- bzw. Neigungssensoren ausgerüstet.

Die eingangs beschriebenen elektrohydraulischen Steuerkreise bzw. damit in Zusammenhang stehende Regelsysteme weisen zahlreiche Nachteile auf, die wie folgt erörtert werden. Der Einsatz eines zentralen Steuerblocks erfordert beträchtliche Leitungslängen, z.B. bis zu 70m, zwischen den Hydraulikzylindern und den sie steuernden Ventilen. Lange Leitungen verschlechtern allerdings das Ansprechverhalten des elektrohydraulischen Steuerkreises aufgrund von Verzögerungen, erhöhen die Anfälligkeit für Leitungsbrüche, schränken den an den Segmenten verfügbaren Raum ein und erhöhen die Kosten des elektrohydraulischen Steuerkreises. Weiters müssen zur Vermeidung eines ungewollten Absinkens eines Segmentes häufig Senkbremsventile eingesetzt werden, welche nur bei einem entsprechenden Druck in den zugehörigen hydraulischen Zuleitungen (und damit betätigtem Steuerventil) öffnen. Da jeder Öffnungsvorgang mit einer zeitlichen Dauer behaftet ist, führen diese zu einer zusätzlichen Verzögerung und einer weiteren Verschlechterung des Ansprechverhaltens. Die bei einer aktiven Regelung zu erwartenden häufigen Wechsel der Verfahrrichtung bewirken ein unablässiges Öffnen und Schließen der Senkbremsventile. Insbesondere ein bei langsamen Verfahrgeschwindigkeiten undefinierter Öffnungszustand der beteiligten Ventile induziert elastische Schwingungen der Segmente. Da die Druckversorgung des elektrohydraulischen Steuerkreises kein Konstantdrucksystem darstellt und der Versorgungsdruck das Ansprechverhalten beeinflusst, können zusätzliche Verzögerungen aufgrund der Höhe des Versorgungsdruckes auftreten. Elektrohydraulischen Steuerkreise, die ausschließlich in Hardware umgesetzt sind, sind nicht flexibel einsetzbar und können nicht an den jeweiligen Betrieb angepasst werden.

Aufgrund dieser Schwächen sind die derzeit eingesetzten elektrohydraulischen Steuerkreise bzw. damit in Zusammenhang stehenden Regelsysteme für die Umsetzung von hochdynamischen Regelungsstrategien nicht geeignet. Das durch die beschriebenen Effekte verzögerte Ansprechverhalten wirkt sich insbesondere bei kleinen Verfahrgeschwindigkeiten negativ auf die Steuerung der Segmente aus.

Die Druckschrift EP 1 882 795 B1 zeigt einen Großmanipulator, insbesondere für Betonpumpen mit einem auf einem Gestell angeordneten, vorzugsweise um eine vertikale Drehachse drehbaren Mastbock, mit einem aus mindestens drei Mastarmen zusammengesetzten Knickmast. Zur Bestimmung einer von den mechanischen Schwingungen eines betreffenden Mastarms abgeleiteten zeitabhängigen Messgröße sind Drucksensoren vorgesehen, wobei an einem bodenseitigen und an einem stangenseitigen Ende eines Kolbens je ein Drucksensor angebracht ist und die Druckdifferenz das entsprechende zeitabhängige Messsignal liefert. Das Dokument EP0190703 offenbart einen elektrohydraulischer Steuerkreis nach dem Oberbegriff des Anspruchs 1.

Die verwendeten Systeme, welche typischerweise zur aktiven Dämpfung von elastischen Schwingungen eingesetzt werden, haben folgende Nachteile: Darin eingesetzte Drucksensoren messen nicht direkt die dynamischen Zustände des Segments. Schwingungen, die auf (beispielsweise aufgrund einer Haftreibung) feststehende Hydraulikzylinder wirken, können so nicht festgestellt werden. Des Weiteren können nicht berücksichtigte dynamische Effekte, welche z.B. durch eine nichtideale Druckversorgung verursacht werden, einen direkten Einfluss auf rückzuführende Messsignale haben und reduzieren damit die Leistungsfähigkeit des elektrohydraulischen Steuerkreises bzw. des zugehörigen Regelsystems. Es ist daher eine Aufgabe der Erfindung, einen elektrohydraulischen Steuerkreis zum Ansteuern eines hydraulisch betätigten Stellorgans bzw. ein Regelsystem zu schaffen, mit dem die oben genannten Nachteile des Standes der Technik beseitigt.

Gemäß der Erfindung wird diese Aufgabe mit einem elektrohydraulischen Steuerkreis mit den Merkmalen des Anspruchs 1 gelöst.

Dank dieser erfindungsgemäßen Lösung ist es möglich, die eingangs angeführten Nachteile des Standes der Technik zu beseitigen und einen elektrohydraulischen Steuerkreis zu schaffen, der sicher und robust ist, eine hohe Zuverlässigkeit aufweist und effizient an den jeweiligen Einsatz angepasst sowie flexibel eingesetzt werden kann. Besonders günstig ist es hierbei, wenn die Sperrventile leckagefrei sind. Der Einsatz einer elektronischen Steuereinrichtung erlaubt die Verwendung von Software, wodurch die Erfindung besonders flexibel einsetzbar ist und rasch an gegebene Erfordernisse angepasst werden kann. Des Weiteren erlaubt die elektronische Steuereinrichtung eine einfache Steuerung/Regelung der Verfahrgeschwindigkeit sowie der Stellkraft des Stellorgans. Generell sind die Begriffe "Ansteuern", "Steuern" und "Regeln" im Zuge dieser Anmeldung nicht als einschränkend aufzufassen, sofern dies nicht explizit angegeben ist. So kann eine Steuerung durch Rückkopplung von Signalen auch zur Regelung verwendet werden, eine Regelung Steueraufgaben übernehmen und unter dem Begriff "Ansteuern" sowohl ein Regeln als auch ein Steuern verstanden werden.

In einer besonders vorteilhaften Ausführungsform ist das erste Ventil an dem Stellorgan angeordnet oder dem Stellorgan zugeordneten Segment anordbar ist. Hierdurch werden die Leitungslängen der Arbeitsleitungen zwischen dem Stellorgan und dem ersten Ventil auf ein Minimum reduziert. Dies verbessert das Ansprechverhalten des elektrohydraulischen Steuerkreises, senkt die Anfälligkeit für Leitungsbrüche, reduziert die Anzahl der (Arbeits-)Leitungen, die entlang eines Segments oder mehreren Segmenten geführt werden, erhöht somit den an dem Segment/den Segmenten verfügbaren Raum und senkt die Kosten des elektrohydraulischen Steuerkreises.

Um einen besonders kompakten und robusten Aufbau des Steuerkreises zu realisieren, kann es vorgesehen sein, dass die Steuereinrichtung als eine für das Segment dedizierte elektronische Einrichtung ausgebildet ist, die vorzugsweise an dem Stellorgan angeordnet oder an dem Stellorgan zugeordneten Segment anordbar ist. Alternativ dazu könnte die elektronische Einrichtung ebenso an einem dem Segment zugeordneten Stellorgan oder in dessen unmittelbarer Nähe angebracht sein.

In einer weiteren Ausgestaltung der Erfindung kann es vorgesehen sein, dass die Arbeitsleitungen des Stellorgans mit Drucksensoren ausgestattet sind, deren Signale der Steuereinrichtung zur Überwachung der am Stellorgan wirkenden Kräfte und/oder Momente und/oder Belastung zugeführt sind. Die Überwachung der am Stellorgan wirkenden Kräfte und/oder Momente und/oder Belastung erlaubt die Implementierung zahlreicher Hilfsfunktionen. So kann der Steuerkreis beispielsweise eine an dem Stellorgan wirkende Stellgröße (insbesondere einen Zustand bzw. eine Stellung des elektrisch angesteuerten ersten Ventils) unmittelbar dem Betrieb und/oder einer Last angepasst werden. Beispielhaft seien hier Maßnahmen zum Erreichen einer konstanten Verfahrgeschwindigkeit eines Segments ("Servokompensation") oder auch diverse Fail-Safe-Funktionen (z.B. die automatische Erkennung von Überdruck und das Einleiten sicherheitsrelevanter Maßnahmen) erwähnt.

In einer vorteilhaften Weiterbildung der Erfindung ist der Steuerkreis, welcher von einer Druckversorgung versorgt ist weiterentwickelt, indem ein Drucksensor zur Überwachung der Druckversorgung vorgesehen ist, zum Erzeugen eines Signals, das der Steuereinrichtung zur Anpassung der Ansteuerung des ersten Ventils an durch den Drucksensor erfasste Druckschwankungen zugeführt ist. Dies ermöglicht eine Anpassung der Druckversorgung an den Betrieb und/oder die Last.

Eine einfache und doch besonders zweckmäßige Ausgestaltung der Erfindung ist gegeben, indem das erste Ventil als proportional wirkendes Ventil, insbesondere als Proportionalventil ausgeführt ist. Das erste Ventil kann als sogenanntes "Stetigventil" ausgeführt sein, welches nicht diskret geschaltet wird, sondern einen stetigen Übergang von Schaltstellungen zulässt. Damit ist ein Volumenstrom eines Fluids einstellbar.

Die Entsperrung der Sperrventile kann direkt oder indirekt erfolgen. So kann in einer günstigen Variante der Erfindung vorgesehen sein, dass die Steuereinrichtung ein Schaltventil ansteuert, welches hydraulische Entsperrleitungen der Sperrventile versorgt. In einer alternativen Variante steuert die Steuereinrichtung die Entsperrung der Sperrventile über elektromagnetische Betätigung an. Dies erlaubt den Verzicht auf zusätzliche hydraulische Bauteile/ Leitungen.

Um die Anzahl der elektrischen Steuereinrichtungen zu minimieren und eine einfache Zugänglichkeit derselben zu ermöglichen, kann es vorteilhaft sein, eine zentrale elektronische Steuereinrichtung, die zum Steuern mehrerer Steuerkreise einer Vielzahl von Segmenten eines Manipulators ausgelegt ist, vorzusehen.

Die elektronische Steuereinrichtung/en ermöglicht eine flexible und effiziente Berücksichtigung von zusätzlichen Parametern, die zur Verbesserung der Performance des Steuerkreises beitragen können. In einer Weiterbildung des Steuerkreises können daher dem Stellorgan Sensormittel zugeordnet sein, die den Betriebszustand des Stellorgans und/oder die räumliche Orientierung des zugeordneten Segments erfassen und entsprechende Messsignale erzeugen, welche an eine dem Segment und/oder dem Manipulator zugeordnete Orientierungssteuer/regeleinrichtung geführt sind.

Um die Betriebssicherheit des Steuerkreises weiter zu erhöhen, ist ein Notkreis definiert. Erfindungsgemäß weist dieser einen zu dem ersten Ventil parallel geschalteten hydraulischen Notkreis auf. Außerdem weist der Notkreis zumindest ein steuerbares Schaltventil sowie gegenseitig verkoppelte Ventile zum Erreichen einer Lasthaltefunktion auf.

In einer günstigen Weiterbildung des Steuerkreises weist der Notkreis zusätzlich Drosseln auf, die vorzugsweise jeweils in Serie mit je einem der Ventile des Notkreises geschaltet sind.

In einer besonders vorteilhaften Ausführungsform der Erfindung, in welcher zumindest das erste Ventil durch eine Druckversorgung über eine Zulaufleitung versorgt ist, kann in der Zulaufleitung ein für den Normalbetrieb entsperrbares Sperrventil angeordnet sein, dessen Entsperrung durch die elektronische Steuereinrichtung gesteuert wird. Dies ermöglicht eine Trennung der dem entsperrbaren Sperrventil nachgeordneten Bauteile/Leitungen von der Druckversorgung, sodass beispielsweise eine Abschaltung der Druckversorgung bei einem Fehlerfall der Bauteile/Leitungen (z.B. Leitungsbruch) nicht zwingend erforderlich ist. Somit können andere an die Druckversorgung angeschlossene Bauteile/Leitungen weiterhin versorgt werden.

Um die Betriebssicherheit des Steuerkreis weiter zu erhöhen, kann es vorgesehen sein, dass die Arbeitsleitungen des Stellorgans durch ein erstes Druckversorgungs- und Rücklaufsystem versorgt sind, während ein von dem ersten System unabhängiges zweites Druckversorgungs- und Rücklaufsystem zur Versorgung von Steuerleitungen des Steuerkreises vorgesehen ist.

Die Erfindung betrifft des Weiteren einen Manipulator, insbesondere Großmanipulator für Autobetonpumpen, welcher zumindest ein Segment, vorzugsweise zwei oder mehr Segmente, umfasst und auf einer vorzugsweise um eine vertikale Drehachse drehbaren Basis angeordnet ist, wobei das Segment bzw. ein erstes der Segmente mit der Basis sowie die Segmente miteinander jeweils über ein Gelenk verbunden sind, an dem das betreffende Segment gegenüber der Basis bzw. zueinander um festgelegte Drehachsen mittels zumindest eines hydraulisch betätigten Stellorgans schwenkbar sind, mit einem elektrohydraulischen Steuerkreis zum Steuern des Stellorgans bzw. zumindest eines der Stellorgane, wie vorangehend diskutiert.

Die Erfindung samt weiteren Ausgestaltungen und Vorteilen ist im Folgenden an Hand mehrerer beispielhafter, nicht einschränkender Ausführungsformen näher erläutert, die in den Figuren veranschaulicht sind. Hierbei zeigt

Fig. 1 eine Seitenansicht eines Transportfahrzeuges mit einem Großmanipulator in einem Transportzustand,
Fig. 2 eine Seitenansicht des Transportfahrzeuges gemäß Fig. 1 mit dem Großmanipulator in einem Betriebszustand,
Fig. 3 eine schematische Darstellung einer ersten Ausführungsform eines erfindungsgemäßen elektrohydraulischen Steuerkreises,
Fig. 4 eine schematische Darstellung einer zweiten Ausführungsform eines nicht erfindungsgemäßen elektrohydraulischen Steuerkreises,

Fig. 5 eine schematische Darstellung eines Regelsystems und
Fig. 6 eine Seitenansicht auf einen Ausschnitt eines Auslegers des Großmanipulator gemäß Fig. 1.

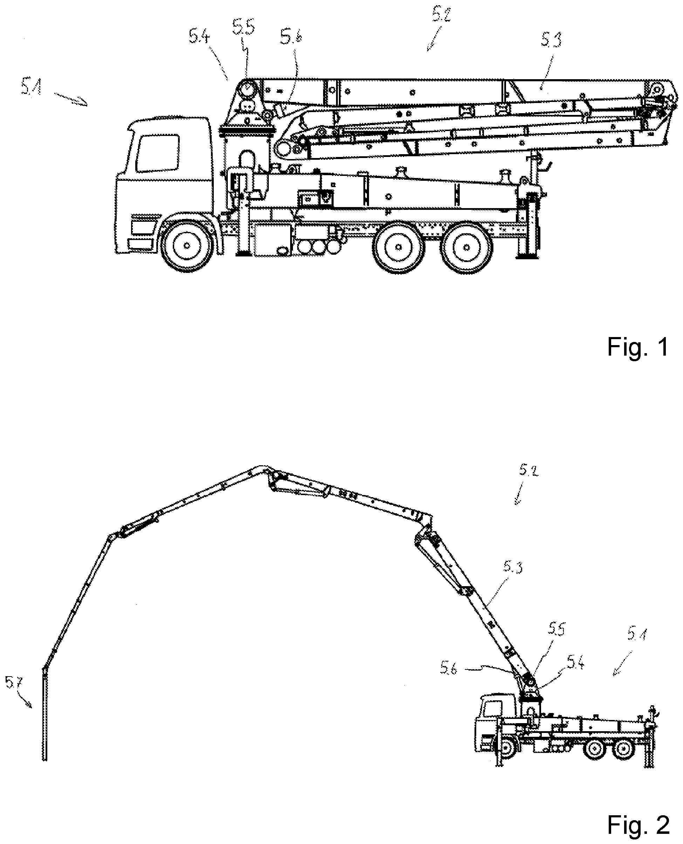

In Fig. 1 ist ein Transportfahrzeug 5.1 in einer Seitenansicht dargestellt, welches einen Großmanipulator 5.2 aufweist, wobei der Großmanipulator 5.2 mehrere Segmente 5.3 aufweist. Fig. 1 zeigt eine Mehrzahl an Segmenten 5.3, wobei zur einfacheren Lesbarkeit in der Darstellung nur ein erstes Segment 5.3 mit Bezugszeichen versehen ist. Die weiteren Segmente 5.3 können im Wesentlichen gleichartig aufgebaut sein, jedoch ist jedes weitere Segment 5.3 mit einem Vorgängersegment 5.3 verbunden. Das erste Segment 5.3 ist darin mit einer Basis 5.4 über ein Gelenk 5.5 verbunden, wobei die Basis 5.4 z.B. als um eine fahrzeugfeste Hochachse drehbares Drehwerk ausgeführt ist. Alternativ dazu könnte die Basis 5.4 allerdings auch auf beliebige andere Art und Weise ausgestaltet sein - wesentlich ist, dass das erste Segment 5.3 über ein Gelenk 5.5 mit der Basis 5.4 verbunden ist.

Zwischen der Basis 5.4 und dem ersten Segment 5.3 ist ein erstes Stellorgan 5.6 angeordnet, das vorzugsweise als Hydraulikzylinder ausgebildet ist; selbstverständlich kann das Stellorgan 5.6 auch in anderer Weise ausgeführt sein, z.B. als Hydraulikmotor. Das erste Stellorgan 5.6 ist dazu eingerichtet, das erste Segment 5.3 zu verschwenken. Die Verschwenkposition wird durch den konstruktiven Aufbau des ersten Segments 5.3, der Basis 5.4 sowie des Gelenks 5.5 und durch eine Auslenkung des Stellorgans 5.6 festgelegt. Um das erste Segment 5.3 zu verschwenken, wird vorzugsweise ein mit dem ersten Segment 5.3 und innerhalb des Hydraulikzylinders angeordneter Kolben mithilfe von auf den Hydraulikzylinder wirkenden Druckdifferenzen verschoben. Das erste Segment 5.3 ist in der gezeigten Ausführungsform mit weiteren Segmenten 5.3 gelenkig verbunden, wobei jeweils ein Stellorgan 5.6 zwischen dem Vorgängersegment und dem Nachfolgesegment angeordnet ist, wobei das Stellorgan 5.6 in der zuvor beschriebenen Art und Weise ein Verschwenken der einzelnen Segmente 5.3 zueinander ermöglicht.

Im Rahmen dieser Offenbarung wird unter dem Begriff *"Manipulator"* eine Arbeitseinrichtung wie z.B. ein Arm, ein Ausleger, ein Hubwerk, ein Hubgerüst oder ein Mast verstanden, die zum Ansteuern der Position und/oder einer Orientierung mindestens eines mittels mindestens einem Stellorgan 5.6 bewegbaren Segments 5.3 geeignet ist, wobei die Position und/oder Orientierung relativ zu einem Vorgängersegment 5.3 oder der Basis 5.4 erfolgt.

Fig. 2 zeigt das Transportfahrzeug 5.1 mit dem Großmanipulator 5.2 in einem beispielhaften Betriebszustand. Die einzelnen Segmente 5.3 sind darin dergestalt verschwenkt, dass diese gemeinsam eine Art Brücke bilden, die dazu geeignet ist, einen Massetransport über die Verbindung der einzelnen Segmente 5.3 hin zu einer von dem Transportfahrzeug 5.1 abgelegenen Stelle zu ermöglichen. Dieses Erfordernis ist insbesondere bei Großmanipulatoren für Autobetonpumpen gegeben, bei welchen flüssiger Beton über weite Strecken gepumpt werden soll, wie folgend genauer ausgeführt wird.

Entlang der Segmente 5.3 ist zu diesem Zwecke eine (nicht gezeigte) Betonleitung, z.B. ein Förderrohr geführt, die an ihrem Ende einen Auslass 5.7 aufweist, der beispielsweise als herabhängender Endschlauch ausgeführt ist und der anhand der Ausrichtung der Segmente 5.3 gezielt an eine gewünschte Stelle/Position herangeführt werden kann. Aufgrund der großen Entfernungen, die hierbei mittels des Großmanipulators 5.2 und darin angesteuerter Stellorgane 5.6 überbrückt werden, der Elastizität und der Deformation der die Brücke bildenden Bauteile, Änderungen des Druckes in der Betonleitung, äußerer Umwelteinflüsse wie beispielsweise der Einwirkung von Windstößen und dergleichen kommt es zu Schwingungen einschließlich Auf- und Abbewegungen des Großmanipulators 5.2, insbesondere der einzelnen Segmente 5.3 und/oder der Betonleitung, wodurch die Einsatzfähigkeit des Großmanipulators 5.2 eingeschränkt werden kann und/oder im schlimmsten Fall eine Gefährdung der beteiligten Personen gegeben sein kann. Des Weiteren gilt es bei Großmanipulatoren 5.2 Sicherheitsmaßnahmen vorzusehen, die ein ungewolltes Absenken einzelner Segmente 5.3, wie dies beispielsweise durch einen Leitungsbruch einer Hydraulikleitung eines Hydraulikzylinders verursacht sein könnte, zu verhindern.

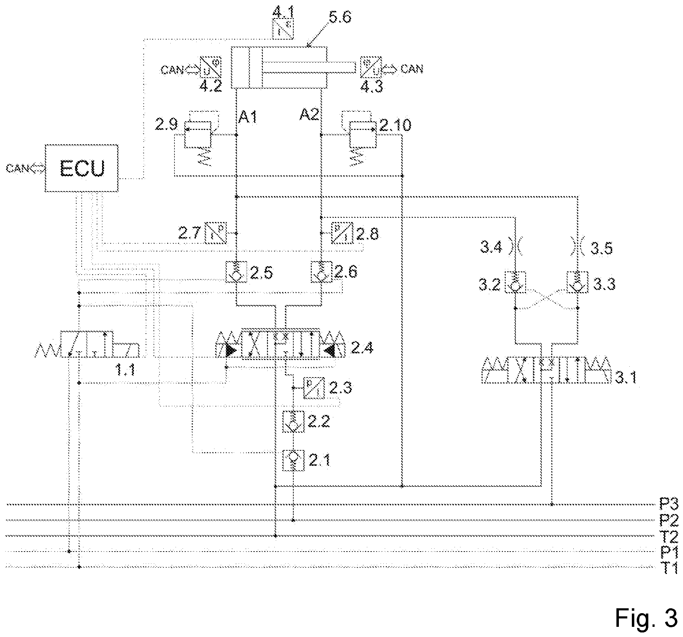

Fig. 3 zeigt eine schematische Darstellung einer ersten Ausführungsform eines erfindungsgemäßen elektrohydraulischen Steuerkreises, wie dieser insbesondere für die Anwendung bei obig beschriebenen Großmanipulatoren 5.2 verwendet werden kann. Zur einfacheren Lesbarkeit wurden die Bezugszeichen der vorangegangen Figuren weiter verwendet und entsprechen, sofern nicht anders definiert, den vorangegangenen Elementen. Das bedeutet allerdings nicht, dass der elektrohydraulische Steuerkreis auf die in den vorangegangnen Figuren gezeigte Ausführungsform eingeschränkt zu betrachten ist. Darin ist ein elektrisch angesteuertes erstes Ventil 2.4 erkennbar, mit welchem ein Stellorgan 5.6, insbesondere der Hydraulikzylinder verfahren werden kann, indem dieses dem Stellorgan 5.6 zugeordnete Arbeitsleitungen A1, A2 mit einer Druckdifferenz beaufschlagt. Hierfür werden die Arbeitsleitungen wahlweise jeweils mit einem ersten Druckversorgungssystem P2 oder einem ersten Rücklaufsystem T2 verbunden. Das erste Ventil 2.4 kann beispielsweise als elektromechanisch angesteuertes 4/3-Proportionalwegeventil ausgeführt sein. Die Ansteuerung des ersten Ventils 2.4 kann beispielsweise direkt mit Proportionalmagneten oder hydraulisch über vorgesteuerte Pilotventile durch eine elektronische Steuereinrichtung ECU (electronic control unit) erfolgen. Die elektronische Steuereinrichtung ECU überwacht den Zustand des Systems, ermöglicht die Implementierung komplexer Algorithmen, bietet eine Schnittstelle zur Kommunikation nach außen über ein Bus-System (beispielsweise CAN) sowie die Möglichkeit eine Vielzahl an Sensoren mit dieser zu verbinden. Ein Schaltventil 1.1, welches beispielsweise als elektromechanisch aktuiertes 3/2-Schaltventil ausgeführt ist, fungiert als zentrales Freigabeventil (auf diese Funktion wird im Folgenden noch näher eingegangen) und wird von der elektronischen Steuereinrichtung ECU angesteuert. Bei Bestromung des Schaltventils 1.1 durch die elektronische Steuereinrichtung ECU schaltet das Schaltventil 1.1 den einem zweiten Druckversorgungssystem P1 zugeordneten Steuerdruck auf die Sperrventile 2.1, 2.5 und 2.6, wodurch diese (zeitgleich) geöffnet werden und ermöglichen, dass ein dem Druckversorgungssystem P2 zugeordneter Versorgungsdruck abhängig von der Stellung/vom Zustand des ersten Ventils 2.4 auf eine Arbeitsleitung eines dem ersten Ventil 2.4 zugeordneten Stellorgans 5.6, insbesondere eines Hydraulikzylinders, beaufschlagt wird. Die Sperrventile 2.1, 2.5 und 2.6 sind vorzugsweise als entsperrbare Rückschlagventile ausgeführt. Die entsperrbaren Rückschlagventile verfügen vorzugsweise über eine Rückstellfeder, wodurch bei Nichtbestromung von dem dem Schaltventil 1.1 zugeordneten Elektromagneten ein definierter Zustand hergestellt wird, indem ein einem zweiten Rücklaufsystem T1 zugeordneter (niedriger) Tankdruck auf die Sperrventile 2.1, 2.5 und 2.6 aufgeschaltet wird.

Die Sperrventile 2.5 und 2.6 erfüllen eine Lasthaltefunktion, wenn sich der Steuerkreis in einem inaktiven Zustand befindet. Das Sperrventil 2.1 hat ebenfalls eine Sicherheitsfunktion, insbesondere verhindert es ein Aufdrücken der Sperrventile 2.5 oder 2.6 (durch den Versorgungsdruck) im Falle eines klemmenden Kolbens im ersten Ventil 2.4 außerhalb der Mittellage. Ein weiteres Sperrventil 2.2, das als Rückschlagventil ausgebildet ist, dient als mechanische Absicherung des Steuerkreises gegenüber einem Bruch in einer dem ersten Druckversorgungssystem P2 zugeordneten Versorgungsleitung. Dem Stellorgan 5.6 sind zwei Druckbegrenzungsventile 2.9 und 2.10 vorgeschaltet, die das Stellorgan 5.6, insbesondere den Hydraulikzylinder vor Beschädigung durch zu hohe Kammerdrücke schützen und so als Überlastventile dienen. Darüber hinaus sind Drucksensoren 2.3, 2.7 und 2.8 vorgesehen, welche den Versorgungsdruck im aktiven Zustand des Steuerkreises und die Drücke messen, mit welchen das Stellorgan 5.6 (insbesondere die beiden Kammerdrücke/Arbeitsdrücke des Hydraulikzylinders) beaufschlagt wird. Der Steuerkreis weist erfindungsgemäß weiters einen zu dem ersten Ventil 2.4 parallel geschalteten hydraulischen Notkreis (Notbedienungszweig) auf, welcher aus Verfügbarkeitsgründen über eine separates dritte Druckversorgungsleitung P3 mit Öl versorgt. Der Notkreis ermöglicht ein Verfahren des Zylinders bei Ausfall der dem ersten Ventil 2.4 zugeordneten (oder vor- bzw. nachgeschalteten) Bauteile. Der Notkreis beinhaltet ein steuerbares Schaltventil 3.1, welches beispielsweise als elektromechanisch angesteuertes 4/3-Schaltventil 3.1 zur Steuerung der Verfahrrichtung vorgesehen ist, sowie zwei gegenseitig verkoppelte Ventile 3.2 und 3.3, welche vorzugsweise als Senkbremsventile in klassischer Verschaltung ausgeführt sind. Mithilfe nachgeschalteter Drosseln 3.4 und 3.5 kann die Verfahrgeschwindigkeit begrenzt werden.

Der Steuerkreis weist des Weiteren einen ersten Sensor bzw. ein erstes Sensormittel 4.1 auf, welches an einem Segment 5.3 angeordnet ist und ein einer Deformation des Segments 5.3 entsprechendes erstes Messsignal - als "Deformationssignal" bezeichnet - liefert. Zusätzlich ist ein zweiter Sensor bzw. ein zweites Sensormittel 4.2 vorgesehen, welches ein der räumlichen Orientierung des Segments 5.3 entsprechendes zweites Messsignal - als "Orientierungssignal" bezeichnet - liefert. Darüber hinaus kann ein weiteres Sensormittel 4.3 vorgesehen sein, dass ebenfalls zur Feststellung der Orientierung heran gezogen wird. Die Sensormittel 4.1, 4.2 und 4.3 können beispielsweise über Bussysteme (z.B. CAN) an die elektronische Steuereinrichtung ECU angebunden sein.

Die elektronische Steuereinrichtung ECU überwacht den Zustand und das Verhalten des Steuerkreises bzw. eines zugehörigen Regelsystems mittels der zur Verfügung stehenden Sensoren. Wenn die elektronische Steuereinrichtung ECU ein Fehlverhalten erkannt, schaltet sie den Steuerkreis bzw. das Regelsystem eigenständig in einen sicheren Zustand.

Die Ansteuerung der elektronischen Steuereinrichtung ECU erfolgt über ein BUS-System (z.B CAN), über welches Steuerungsbefehle und Sollwerte übertragen werden können, die beispielsweise über eine Benutzerschnittstelle (z.B. mit Joystick, Hebeln usw.) von einem Benutzer vorgegeben werden können. Des Weiteren können Statusinformationen des Steuerkreises bzw. des Regelsystems an übergeordnete Steuerungsgeräte übermittelt werden. Die für eine gewünschte Verfahrgeschwindigkeit notwendige Stellung des ersten Ventils 2.4 kann mittels Software anhand gemessener Druckverhältnisse ermittelt werden. Aufgrund der eingesetzten Sensoren kann der erforderliche Versorgungsdruck durch eine lokale elektronische Steuerungseinrichtung ECU an eine übergeordnete elektronische Steuerungseinrichtung ECU, welche beispielsweise eine Hydraulikpumpe steuert, über ein BUS-System übermittelt werden.

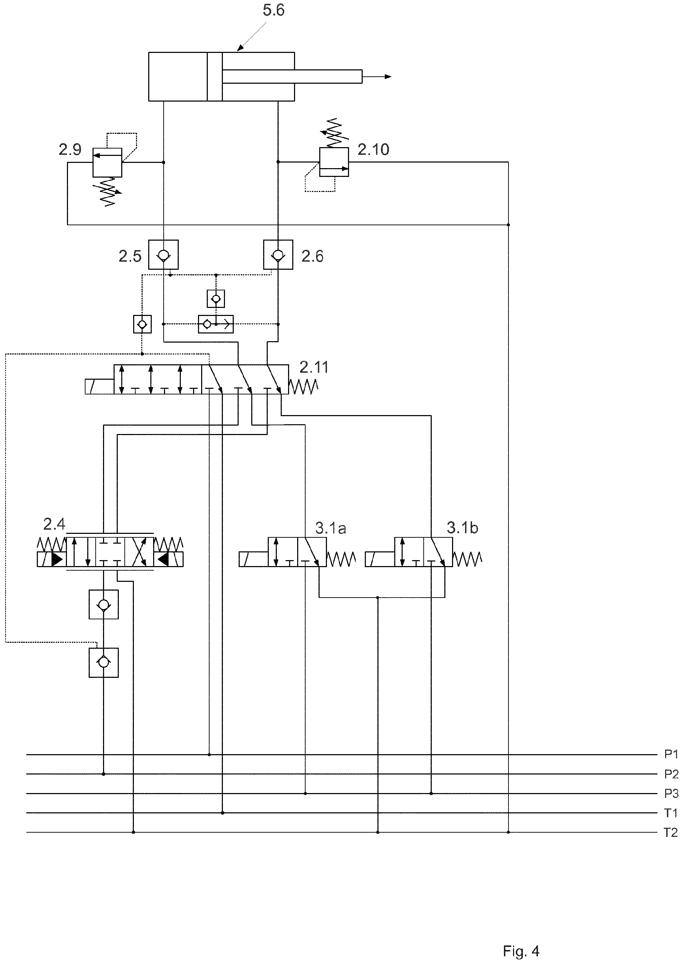

Fig. 4 zeigt eine schematische Darstellung einer zweiten Ausführungsform eines elektrohydraulischen Steuerkreises, der nicht durch die Ansprüche gedeckt ist. Darin ist die Anzahl der für die Lasthaltefunktion zuständigen Ventile (2.5, 2.6, 3.2 und 3.3) dadurch verringert, dass das Freigabeventil 1.1 durch ein 6/2-Wegeschaltventil 2.11 als Selektor ersetzt wurde. Die Ansteuerung des Notkreises erfolgt über zwei Schaltventile 3.1a und 3.1b. In Fig. 4 ist die elektronische Steuerungseinrichtung ECU nicht explizit dargestellt, allerdings als gleichartig wie in Fig. 3 angebunden zu betrachten.

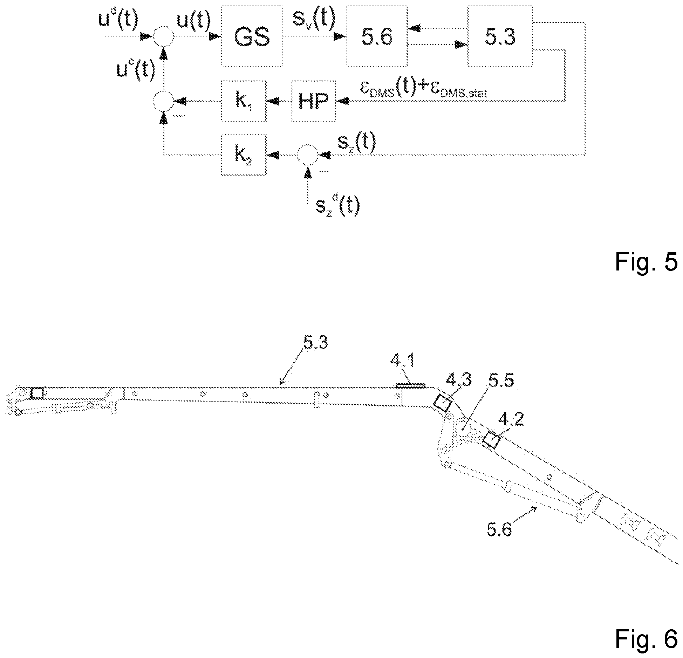

In Fig. 5 ist eine schematische Darstellung eines Regelsystems erkennbar, welches vorzugsweise, aber nicht zwingenderweise auf den zuvor beschriebenen Steuerkreis aufsetzen kann, und zur besseren Verständlichkeit in weiterer Folge aufbauend auf diesen Steuerkreis beschrieben wird (im Hinblick auf die Bezugszeichen gilt das bereits zuvor Gesagte).

Ein dem Regelsystem zugeordneter Regelalgorithmus läuft auf der elektronischen Steuereinrichtung ECU ab, der zur Steuerung der Verfahrgeschwindigkeit des Zylinders eingerichtet ist, womit diese als eine Stellgröße des Regelsystems aufgenommen werden kann. Eine lokale Rückkopplung eines dynamischen Anteils eines ein Deformationssignal liefernden ersten Sensors 4.1, der insbesondere als Dehnmessstreifen ausgeführt ist, kann zur Dämpfung der gesamten Auslegerstruktur (bestehend aus einer Aneinanderreihung von Segmenten AL (die einen Ausleger bilden, entsprechend den Segmenten 5.3 - es kann aber auch nur ein einziges Segment AL vorgesehen sein) verwendet werden. Um einen stationären Anteil des Deformationssignals, dessen Rückkopplung keinen Dämpfungseffekt erzielt, zu eliminieren, werden geeignete Hochpassfilter verwendet. Die Gelenkstellungen der Gelenke 5.5 bzw. die Auslenkung zumindest eines Steuerorgans 5.6 (und somit die Ausrichtung der Segmente 5.3) kann somit insbesondere beim Auftreten elastischer Schwingungen durch das Regelsystem aktiv beeinflusst werden. Bei einem Pumpbetrieb beispielsweise einer Autobetonpumpe könnte ein Eingriff des Regelsystems zu einer Driftbewegung der Segmente 5.3 und damit zu einer Abweichung von einer gewünschten Sollposition führen. Um eine stationäre Position dauerhaft einhalten zu können, sind daher zusätzliche Sensoren 4.2 und 4.3 vorgesehen, welche ein Orientierungssignal liefern und einen Rückschluss auf die Position einzelner Segmente 5.3 ermöglichen. Ein daraus resultierendes Regelgesetz ist in Fig. 5 erkennbar, in welches eine Rückkopplung eines lokalen Deformationssignals $\varepsilon_{DMS}(t)$ (welches z.B. durch einen lokal an einem Segment 5.3 angeordneten Sensor 4.2 oder 4.3 geliefert wird), einer gemessene Auslenkung $s_z(t)$ und einem gewünschten Sollwert $s_z^d(t)$ eines Stellorgans 5.6 (insbesondere die Kolbenposition eines Hydraulikzylinders) vorsieht und wie folgt lautet:

$$u^c(t) = k_1 \varepsilon_{DMS}(t) - k_2 (s_z(t) - s_z^d(t))$$

$u^c(t)$ bezeichnet dabei die vom Regelgesetz ermittelte Stellgröße bzw. eine gewünschte Verfahrgeschwindigkeit des Stellorgans 5.6. Das lokale Deformationssignals $\varepsilon_{DMS}(t)$ repräsentiert den dynamischen Anteil des gemessenen Deformationssignals (insbesondere einer Balkenkrümmung eines Segments 5.3), welches durch einen Hochpassfilter HP von einem stationären Anteil $\varepsilon_{DMS,stat}$ getrennt wird. Die Faktoren $k_1$ und $k_2$ sind Verstärkungsfaktoren und dienen zur Parametrierung des Regelsystems. Für positive Verstärkungsfaktoren $k_1$, $k_2$ > 0 weist das Regelsystem ein asymptotisch stabiles Verhalten auf. Anstelle der Regelung der Auslenkung des Stellorgans 5.6 könnte ebenso die Auslenkung eines Gelenks 5.5 geregelt werden.

Die Eingangsgröße eines Stellorgans 5.6 ist durch das Signal $s_v(t)$ dargestellt, welches beispielsweise die Kolbenposition eines Steuerventils beschreibt. Die elektronische Steuereinrichtung ECU kann jene Ventilstellung/en ermitteln, welche eine gewünschten Verfahrgeschwindigkeit u(t) eines Stellorgans 5.6 (also die Änderungsrate einer Auslenkung) bewirken (Geschwindigkeitssteuerung GS). Das Signal $u^d(t)$ entspricht einer von einem Benutzer vorgegebenen gewünschten Verfahrgeschwindigkeit.

Um eine dynamisch anspruchsvolle Positionsregelung zu ermöglichen werden vorzugsweise Inertialsensoren in Form von IMUs bekannter Art an einzelnen Segmenten 5.3 angeordnet, die der Ermittlung der Stellung des Gelenks 5.5 und/oder der Auslenkung des Stellorgans 5.6 und/oder der Orientierung eines Segments 5.3 dienen können. Es kann auch jedem Segment 5.3 ein Inertialsensor zugeordnet sein. Ein solcher Inertialsensor besteht beispielsweise aus einem dreiachsigen Drehratensensor in Kombination mit einem dreiachsigen Beschleunigungssensor. Zusätzlich dazu kann auch ein Erdmagnetfeldsensor vorgesehen sein, der eine von der Vertikalen abweichende, feststehende Richtung im Raum bestimmen kann. Da translatorische Bewegungen nur einen sehr geringen Einfluss auf Drehratensensoren haben, können deren Messungen herangezogen werden, um eine Verfälschung (Abweichungen von den realen Werten) eines aus Beschleunigungswerten ermittelten Neigungswinkels zu erkennen und zu korrigieren. Der Neigungswinkel wird durch Integration der gemessenen Drehrate ermittelt und mittels der Messungen der Beschleunigungssensoren stationär abgeglichen. Damit wird bei dynamischen (raschen) Bewegungen der Sensoren der Messfehler minimiert. Zur Umsetzung wird z.B. ein Beobachter der Form

$$\dot{\hat{\psi}}(t) = -\hat{b}(t) + \dot{\psi}_{DRS}(t) + \hat{k}_1\left(\psi_{BS}(t) - \hat{\psi}(t)\right)$$

$$\dot{\hat{b}}(t) = \hat{k}_2\left(\psi_{BS}(t) - \hat{\psi}(t)\right)$$

verwendet. Dabei bezeichnet $\hat{\psi}(t)$ den geschätzten Neigungswinkel, $\psi_{DRS}(t)$ die gemessene Drehrate in der entsprechenden Achse und $\psi_{BS}(t)$ den mittels der Beschleunigungssensoren ermittelten Neigungswinkel. Durch den Schätzwert b(t) wird der Offset bzw. Bias des Drehratensensors kompensiert. Mit den beiden Parametern $\hat{k}_1$ und $\hat{k}_2$ wird die Dynamik des Beobachters beeinflusst. Werden mit $\hat{\psi}_n(t)$ und $\hat{\psi}_v(t)$ die geschätzten Neigungswinkel eines Segments 5.3 nach und vor einem dem Segment 5.3 zugeordneten Gelenk 5.5 bezeichnet, kann durch die Bildung der Differenz ein Gelenkwinkel $\varphi(t)$ ermittelt werden,

$$\varphi(t) = \hat{\psi}_n(t) - \hat{\psi}_v(t).$$

Bei Kenntnis der Geometrie einer dem Gelenk 5.5 zugeordneten Gelenkskonstruktion kann der Zusammenhang zwischen der Auslenkung $s_z(t)$ des Stellorgans 5.6 und dem Gelenkwinkel $\varphi(t)$ durch eine Funktion

$$s_z(t) = f(\varphi(t))$$

dargestellt werden. Die Auslenkung $s_z(t)$ kann auf diese Weise analytisch oder alternativ dazu durch Messung ermittelt werden.

Durch die direkte Applikation von zumindest einem ersten Sensor 4.1 an einem Segment 5.3 wird eine qualitativ bessere Messung von elastischen Schwingungen möglich. So kann selbst bei Auftreten von Haftreibung im Stellorgan 5.6 eine dynamische Bewegung eines Segments 5.3 erfasst werden, im Gegensatz zu Messanordnungen basierend auf Drucksensoren. Des Weiteren wird die Messung systematisch von Störeffekten, welche im hydraulischen System verursacht werden, entkoppelt.

Durch das beschriebene Verfahren zur Messung der Gelenkwinkel $\varphi(t)$ bzw. der Auslenkung $s_z(t)$ eines Stellorgans 5.6 kann der systematische Messfehler gegenüber bekannten Anordnungen signifikant reduziert werden. Dies ermöglicht eine Umsetzung einer Positionsregelung mit wesentlich höherer Güte. Die Vorteile einer kompakten und robusten Bauweise sind bei Inertialsensoren gegeben, welche im Zuge des erfindungsgemäßen Regelsystems bevorzugt eingesetzt werden.

Die Verwendung von Inertialsensoren bietet indessen noch weitere Vorteile. Zur Dämpfung eines Segments 5.3 können alternativ zur Rückkopplung des mit Dehnmessstreifen gemessenen Deformationssignals (beispielsweise eine Balkenkrümmung eines Segments 5.3) Beschleunigungswerte gemessen werden, da diese ebenso die auftretenden Kräfte an einzelnen Punkten eines Segments 5.3 repräsentieren. Durch die dreidimensionale Ausführung der Inertialsensoren kann damit mit den Sensoren neben der Dämpfung der Schwingungen sowie der Positionsregelung in der vertikalen Ebene ebenfalls eine Dämpfung der Schwingungen in der horizontalen Ebene erreicht werden, indem die gemessene horizontale Beschleunigung auf das Stellglied des Drehwerks rückgekoppelt wird. Falls der Inertialsensor zusätzlich mit einem Erdmagnetfeldsensor ausgestattet ist, so kann damit des Weiteren eine Überwachung und damit auch eine Regelung eine Drehwerkinkels realisiert werden. Durch diese Multifunktionalität der Inertialsensoren können vielfältige Regelungs- und Steuerungsfunktionen daher mit insgesamt weniger Komponenten erfüllt werden, was zu einer Steigerung der Verfügbarkeit des Regelsystems führt.

Abschließend sei in Bezug auf Fig. 5 festgehalten, dass das Stellorgan 5.6 ebenso als *"Aktor"* bezeichnet werden könnte und zumindest ein Segment 5.3 einen sogenannten *"Ausleger"* bildet.

Eine bevorzugte Anordnung von Sensoren 4.2 und 4.3 an einem Masten (bzw. an Segmenten 5.3) ist in Fig. 6 dargestellt, welche eine Seitenansicht auf einen Ausschnitt eines Auslegers des Großmanipulator gemäß Fig. 1 zeigt. Die Sensoren 4.2 und 4.3 sind vorzugsweise als Inertialsensoren ausgeführt. Alternativ dazu kann auch lediglich ein Sensor 4.3 vorgesehen sein. Das Vorsehen beider Sensoren 4.2 und 4.3, die je vor bzw. nach dem Gelenk 5.5 angeordnet sind, erhöht allerdings die Redundanz der Messsignale zur Bestimmung der Orientierung des Segments 5.3, wodurch die Fehlertoleranz des Regelsystem erhöht werden kann bzw. Messfehler erkannt und/oder korrigiert werden können. Des Weiteren ist der erste Sensor 4.1 erkennbar, der vorzugsweise als Dehnmessstreifen ausgeführt ist und in einem Bereich des Segments 5.3 platziert wird, in welchem ein relevantes Deformationssignal den Maximalwert annimmt. Dieser Bereich liegt häufig in den ersten 20 % der Längserstreckung des jeweiligen Segments 5.3.

Die Erfindung kann auf vielfältig eingesetzt werden und ist nicht auf die gezeigten Ausführungsformen beschränkt. So können beispielsweise die Anzahl der Segmente variiert und/oder die Stellorgane 5.6 pneumatisch oder elektrisch ausgeführt werden. Die Erfindung ist nicht auf Großmanipulatoren beschränkt sondern kann in zahlreichen anderen Bereichen angewendet werden. Wesentlich sind die der Erfindung zugrunde liegenden Gedanken, welche in Anbetracht dieser Lehre durch einen Fachmann in mannigfaltiger Weise ausführbar sind innerhalb des Schutzbereiches der Erfindung, der durch die folgende Ansprüche definiert ist.

**Patentansprüche**

1. Elektrohydraulischer Steuerkreis zum Ansteuern eines hydraulisch betätigten Stellorgans (5.6), aufweisend ein Stellorgan, mittels dessen ein Segment (5.3) eines Manipulators, insbesondere eines Großmanipulators für Autobetonpumpen, hinsichtlich seiner Orientierung verstellbar ist,

    ein elektrisch angesteuertes erstes Ventil (2.4), welches mit hydraulischen Arbeitsleitungen des Stellorgans (5.6) zu dessen Ansteuerung verbunden ist, sowie in den Arbeitsleitungen des Stellorgans (5.6) vorgesehenen Sperrventile (2.5, 2.6), die an dem Stellorgan (5.6) angeordnet oder dem diesem Stellorgan (5.6) zugeordneten Segment (5.3) anordbar und für den Normalbetrieb des Stellorgans (5.6) entsperrbar sind, wobei das Entsperren der Sperrventile (2.5, 2.6) durch eine von dem ersten Ventil (2.4) und den Sperrventilen (2.5, 2.6) gesonderte elektronische Steuereinrichtung (ECU) angesteuert wird
**dadurch gekennzeichnet, dass** der Steuerkreis weiters einen zu dem ersten Ventil (2.4) parallel geschalteten hydraulischen Notkreis aufweist, wobei der Notkreis zumindest ein steuerbares Schaltventil (3.1) sowie gegenseitig verkoppelte Ventile (3.2, 3.3) zum Erreichen einer Lasthaltefunktion aufweist.

2. Steuerkreis nach Anspruch 1, **dadurch gekennzeichnet, dass** das erste Ventil (2.4) an dem Stellorgan (5.6) angeordnet oder dem Stellorgan (5.6) zugeordneten Segment (5.3) anordbar ist.

3. Steuerkreis nach Anspruch 1 oder 2, **dadurch gekennzeichnet, dass** die Steuereinrichtung (ECU) als eine für das Segment (5.3) dedizierte elektronische Einrichtung ausgebildet ist, die vorzugsweise an dem Stellorgan (5.6) angeordnet oder an dem Stellorgan (5.5) zugeordneten Segment (5.3) anordbar ist.

4. Steuerkreis nach einem der vorhergehenden Ansprüche, **dadurch gekennzeichnet, dass** die Arbeitsleitungen des Stellorgans (5.6) mit Drucksensoren (2.7, 2.8) ausgestattet sind, deren Signale der Steuereinrichtung zur Überwachung der am Stellorgan (5.6) wirkenden Kräfte und/oder Momente und/oder Belastung zugeführt sind.

5. Steuerkreis nach einem der vorhergehenden Ansprüche, welcher von einer Druckversorgung (P2, T2) versorgt ist, **dadurch gekennzeichnet, dass** ein Drucksensor (2.3) zur Überwachung der Druckversorgung (P2, T2) vorgesehen ist, zum Erzeugen eines Signals, das der Steuereinrichtung (ECU) zur Anpassung der Ansteuerung des ersten Ventils (2.4) an durch den Drucksensor (2.3) erfasste Druckschwankungen zugeführt ist.

6. Steuerkreis nach Anspruch 1, **dadurch gekennzeichnet, dass** das erste Ventil (2.4) als proportional wirkendes Ventil, insbesondere als Proportionalventil ausgeführt ist.

7. Steuerkreis nach einem Ansprüche 1 bis 6, **dadurch gekennzeichnet, dass** die Steuereinrichtung (ECU) ein Schaltventil (1.1) ansteuert, welches hydraulische Entsperrleitungen der Sperrventile (2.5, 2.6) versorgt.

8. Steuerkreis nach einem Ansprüche 1 bis 6, **dadurch gekennzeichnet, dass** die Steuereinrichtung die Entsperrung der Sperrventile (2.5, 2.6) über elektromagnetische Betätigung ansteuert.

9. Steuerkreis nach einem der vorhergehenden Ansprüche, **gekennzeichnet durch** eine zentrale elektronische Steuereinrichtung, die zum Steuern mehrerer Steuerkreise einer Vielzahl von Segmenten (5.3) eines Manipulators ausgelegt ist.

10. Steuerkreis nach einem der vorhergehenden Ansprüche, **gekennzeichnet durch** dem Stellorgan (5.6) zuordenbare Sensormittel (4.1, 4.2, 4.3), die den Betriebszustand des Stellorgans (5.6) und/oder die räumliche Orientierung des zugeordneten Segments (5.3) erfassen und entsprechende Messsignale erzeugen können, welche an eine dem Segment (5.3) und/oder dem Manipulator zugeordnete Orientierungssteuer/regeleinrichtung geführt werden können.

11. Steuerkreis nach einem der vorhergehenden Ansprüche, **dadurch gekennzeichnet, dass** das steuerbare Schaltventil (3.1) an dem Stellorgan (5.6) angeordnet oder dem Stellorgan (5.6) zugeordneten Segment (5.3) anordbar ist und vorzugsweise über eine eigene Druckversorgungsleitung (P3) versorgt ist.

12. Steuerkreis nach Anspruch 11, **dadurch gekennzeichnet, dass** der Notkreis zusätzlich Drosseln (3.4, 3.5) aufweist, die vorzugsweise jeweils in Serie mit je einem der gegenseitig verkoppelten Ventile (3.2, 3.3) des Notkreises geschaltet sind.

13. Steuerkreis nach einem der vorhergehenden Ansprüche, wobei zumindest das erste Ventil (2.4) durch eine Druckversorgung (P2) über eine Zulaufleitung versorgt ist, **dadurch gekennzeichnet, dass** in der Zulaufleitung ein für den Normalbetrieb entsperrbares Sperrventil (2.1) angeordnet ist, dessen Entsperrung durch die elektronische Steuereinrichtung (ECU) gesteuert wird.

14. Steuerkreis nach einem der vorhergehenden Ansprüche, wobei die Arbeitsleitungen des Stellorgans (5.6) durch ein erstes Druckversorgungs- und Rücklaufsystem (P2, T2) versorgt sind, **dadurch gekennzeichnet, dass** ein von dem ersten System (P2, T2) unabhängiges zweites Druckversorgungs- und Rücklaufsystem (P1, T1) zur Versorgung von Steuerleitungen des Steuerkreises vorgesehen ist.

15. Manipulator, insbesondere Großmanipulator für Autobetonpumpen, welcher zumindest ein Segment (5.3), vorzugsweise zwei oder mehr Segmente (5.3), umfasst und auf einer vorzugsweise um eine vertikale Drehachse drehbaren Basis angeordnet ist,

wobei das Segment (5.3) bzw. ein erstes der Segmente (5.3) mit der Basis sowie die Segmente (5.3) miteinander jeweils über ein Gelenk verbunden sind, an dem das betreffende Segment (5.3) gegenüber der Basis bzw. zueinander um festgelegte Drehachsen mittels zumindest eines hydraulisch betätigten Stellorgans (5.6) schwenkbar sind,

**gekennzeichnet durch** einen elektrohydraulischen Steuerkreis nach einem der vorhergehenden Ansprüche zum Steuern des Stellorgans (5.6) bzw. zumindest eines der Stellorgane (5.6).

## Claims

1. Electrohydraulic control circuit for controlling a hydraulically actuated actuator (5.6), comprising an actuator by means of which a segment (5.3) of a manipulator, in particular a large manipulator for truck-mounted concrete pumps, can be adjusted with respect to its orientation,

an electrically controlled first valve (2.4), which is connected to hydraulic working lines of the actuator (5.6) for its control, as well as shut-off valves (2.5, 2.6) provided in the working lines of the actuator (5.6), which valves are arranged on the actuator (5.6) or can be arranged on the segment (5.3) assigned to this actuator (5.6) and can be unlocked for normal operation of the actuator (5.6), the unlocking of the shut-off valves (2.5, 2.6) being performed by an electronic control unit separate from the first valve (2.4) and the shut-off valves (2.5, 2.6). 6), **characterized in that** the control circuit further has a hydraulic emergency circuit connected in parallel with the first valve (2.4), the emergency circuit having at least one controllable switching valve (3.1) and mutually coupled valves (3.2, 3.3) for achieving a load-holding function.

2. Control circuit according to claim 1, **characterized in that** the first valve (2.4) is arranged on the actuator (5.6) or can be arranged on a segment (5.3) assigned to the actuator (5.6).

3. Control circuit according to claim 1 or 2, **characterized in that** the control device (ECU) is designed as an electronic device dedicated to the segment (5.3), which is preferably arranged on the actuator (5.6) or can be arranged on the segment (5.3) assigned to the actuator (5.5).

4. Control circuit according to one of the preceding claims, **characterized in that** the working lines of the actuator (5.6) are equipped with pressure sensors (2.7, 2.8), the signals of which are fed to the control device for monitoring the forces and/or torques and/or load acting on the actuator (5.6).

**5.** Control circuit according to one of the preceding claims, which is supplied by a pressure supply (P2, T2), **characterized in that** a pressure sensor (2.3) for monitoring the pressure supply (P2, T2) is provided for generating a signal which is fed to the control device (ECU) for adapting the actuation of the first valve (2.4) to pressure fluctuations detected by the pressure sensor (2.3).

**6.** Control circuit according to claim 1, **characterized in that** the first valve (2.4) is designed as a proportionally acting valve, in particular as a proportional valve.

**7.** Control circuit according to claims 1 to 6, **characterized in that** the control device (ECU) controls a switching valve (1.1) which supplies hydraulic shut-off lines of the shut-off valves (2.5, 2.6).

**8.** Control circuit according to one of claims 1 to 6, **characterized in that** the control device controls the unlocking of the locking valves (2.5, 2.6) via electromagnetic actuation.

**9.** Control circuit according to one of the preceding claims, **characterized by** a central electronic control device designed to control a plurality of control circuits of a plurality of segments (5.3) of a manipulator.

**10.** Control circuit according to one of the preceding claims, **characterized by** sensor means (4.1, 4.2, 4.3) which can be associated with the actuator (5.6) and which can detect the operating state of the actuator (5.6) and/or the spatial orientation of the associated segment (5.3) and can generate corresponding measurement signals which can be fed to an orientation control/regulating device associated with the segment (5.3) and/or the manipulator.

**11.** Control circuit according to one of the preceding claims, **characterized in that** the controllable switching valve (3.1) is arranged on the actuator (5.6) or can be arranged on the segment (5.3) assigned to the actuator (5.6) and is preferably supplied via its own pressure supply line (P3).

**12.** Control circuit according to claim 11, **characterized in that** the emergency circuit additionally comprises throttles (3.4, 3.5) which are preferably each connected in series with one of the mutually coupled valves (3.2, 3.3) of the emergency circuit.

**13.** Control circuit according to one of the preceding claims, wherein at least the first valve (2.4) is supplied by a pressure supply (P2) via a supply line, **characterized in that** a shut-off valve (2.1) which can be released for normal operation is arranged in the supply line, the release of which shut-off valve is controlled by the electronic control unit (ECU).

**14.** Control circuit according to one of the preceding claims, wherein the working lines of the actuator (5.6) are supplied by a first pressure supply and return system (P2, T2), **characterized in that** a second pressure supply and return system (P1, T1) independent of the first system (P2, T2) is provided for supplying control lines of the control circuit.

**15.** Manipulator, in particular large manipulator for truck-mounted concrete pumps, which comprises at least one segment (5.3), preferably two or more segments (5.3), and is arranged on a base which is preferably rotatable about a vertical axis of rotation,

wherein the segment (5.3) or a first one of the segments (5.3) is connected to the base and the segments (5.3) are connected to one another in each case via a joint at which the respective segment (5.3) can be pivoted relative to the base or to one another about fixed axes of rotation by means of at least one hydraulically actuated actuator (5.6),
**characterized by** an electrohydraulic control circuit according to one of the preceding claims for controlling the actuator (5.6) or at least one of the actuators (5.6).

## Revendications

**1.** Circuit de commande électrohydraulique pour la commande d'un organe de réglage (5.6) actionné hydrauliquement, présentant un organe de réglage au moyen duquel un segment (5.3) d'un manipulateur, en particulier d'un grand manipulateur pour pompes à béton automotrices, peut être réglé quant à son orientation,

une première vanne (2.4) à commande électrique, qui est reliée aux conduites de travail hydrauliques de l'organe de réglage (5.6) pour sa commande, ainsi que
des soupapes d'arrêt (2.5, 2.6) prévues dans les conduites de travail de l'organe de réglage (5.6), qui sont disposées sur l'organe de réglage (5.6) ou peuvent être disposées sur le segment (5.3) associé à cet organe de réglage (5.6) et peuvent être débloquées pour le fonctionnement normal de l'organe de réglage (5.6), le déblocage des soupapes d'arrêt (2.5, 2.6) étant assuré par un dispositif de commande distinct de la première soupape (2.4) et des soupapes d'arrêt (2.5, 2.6). 6), **caractérisé en ce que** le circuit de commande présente en outre un circuit hydraulique de secours monté en parallèle avec la première soupape (2.4), le circuit de secours présentant au moins une soupape de commutation (3.1) pouvant être commandée ainsi que des soupapes (3.2, 3.3) couplées mutuellement pour atteindre une fonction de maintien de charge.

2. Circuit de commande selon la revendication 1, **caractérisé en ce que** la première vanne (2.4) est disposée sur l'organe de réglage (5.6) ou peut être disposée sur le segment (5.3) associé à l'organe de réglage (5.6).

3. Circuit de commande selon la revendication 1 ou 2, **caractérisé en ce que** le dispositif de commande (ECU) est conçu comme un dispositif électronique dédié au segment (5.3), qui est de préférence disposé sur l'organe de réglage (5.6) ou peut être disposé sur le segment (5.3) associé à l'organe de réglage (5.5).

4. Circuit de commande selon l'une des revendications précédentes, **caractérisé en ce que** les conduites de travail de l'organe de réglage (5.6) sont équipées de capteurs de pression (2.7, 2.8) dont les signaux sont transmis au dispositif de commande pour surveiller les forces et/ou les couples et/ou la charge agissant sur l'organe de réglage (5.6).

5. Circuit de commande selon l'une des revendications précédentes, alimenté par une alimentation en pression (P2, T2), **caractérisé en ce qu'**un capteur de pression (2.3) est prévu pour surveiller l'alimentation en pression (P2, T2), pour générer un signal qui est transmis au dispositif de commande (ECU) pour adapter la commande de la première vanne (2.4) aux variations de pression détectées par le capteur de pression (2.3).

6. Circuit de commande selon la revendication 1, **caractérisé en ce que** la première vanne (2.4) est conçue comme une vanne à action proportionnelle, en particulier comme une vanne proportionnelle.

7. Circuit de commande selon l'une des revendications 1 à 6, **caractérisé en ce que** le dispositif de commande (ECU) commande une vanne de commutation (1.1) qui alimente des conduites de déblocage hydraulique des vannes d'arrêt (2.5, 2.6).

8. Circuit de commande selon l'une des revendications 1 à 6, **caractérisé en ce que** le dispositif de commande commande le déblocage des vannes d'arrêt (2.5, 2.6) par actionnement électromagnétique.

9. Circuit de commande selon l'une des revendications précédentes, **caractérisé par** un dispositif de commande électronique central conçu pour commander plusieurs circuits de commande d'une pluralité de segments (5.3) d'un manipulateur.

10. Circuit de commande selon l'une des revendications précédentes, **caractérisé par** des moyens de détection (4.1, 4.2, 4.3) pouvant être associés à l'organe de réglage (5.6), qui détectent l'état de fonctionnement de l'organe de réglage (5.6) et/ou l'orientation spatiale du segment (5.3) associé et peuvent générer des signaux de mesure correspondants, qui peuvent être transmis à un dispositif de commande/régulation d'orientation associé au segment (5.3) et/ou au manipulateur.

11. Circuit de commande selon l'une des revendications précédentes, **caractérisé en ce que** la vanne de commutation commandable (3.1) est disposée sur l'organe de réglage (5.6) ou peut être disposée sur le segment (5.3) associé à l'organe de réglage (5.6) et est alimentée de préférence par une conduite d'alimentation en pression propre (P3).

12. Circuit de commande selon la revendication 11, **caractérisé en ce que** le circuit de secours comporte en outre des étranglements (3.4, 3.5) qui sont de préférence montés en série avec l'une des vannes (3.2, 3.3) du circuit de secours qui sont couplées entre elles.

13. Circuit de commande selon l'une des revendications précédentes, dans lequel au moins la première vanne (2.4) est alimentée par une alimentation en pression (P2) via une conduite d'alimentation, **caractérisé en ce que** dans la conduite d'alimentation est disposée une vanne d'arrêt (2.1) pouvant être débloquée pour le fonctionnement normal, dont le déblocage est commandé par le dispositif de commande électronique (ECU).

14. Circuit de commande selon l'une des revendications précédentes, dans lequel les lignes de travail de l'organe de commande (5.6) sont alimentées par un premier système d'alimentation en pression et de retour (P2, T2), **caractérisé en ce qu'**il est prévu un deuxième système d'alimentation en pression et de retour (P1, T1) indépendant du premier système (P2, T2) pour l'alimentation des lignes de commande du circuit de commande.

15. Manipulateur, en particulier grand manipulateur pour pompes à béton automotrices, qui comprend au moins un segment (5.3), de préférence deux ou plusieurs segments (5.3), et qui est disposé sur une base pouvant de préférence tourner autour d'un axe de rotation vertical,

le segment (5.3) ou un premier des segments (5.3) étant relié à la base ainsi que les segments (5.3) entre eux respectivement par une articulation sur laquelle le segment (5.3) concerné peut pivoter par rapport à la base ou l'un par rapport à l'autre autour d'axes de rotation définis au moyen d'au moins un organe de réglage (5.6) actionné hydrauliquement,

**caractérisé par** un circuit de commande électrohydraulique selon l'une des revendications précédentes pour commander l'organe de réglage (5.6) ou au moins l'un des organes de réglage (5.6).

5.4 5.5 5.6 5.2 5.3

5.1

Fig. 1

5.2

5.3

5.5

5.6 5.4 5.1

5.7

Fig. 2

Fig. 3

EP 2 984 350 B1

Fig. 4

16

EP 2 984 350 B1

Fig. 5

Fig. 6

17

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 1882795 B1
- EP 0190703 A